# EUROPÄISCHE PATENTSCHRIFT

(11) **EP 0 942 211 B1**
(45) Veröffentlichungstag und Bekanntmachung des Hinweises auf die Patenterteilung: **19.05.2004**
(21) Anmeldenummer: 99104456.1
(22) Anmeldetag: 05.03.1999
(51) Int. Cl.: F16K 11/078, F16K 27/04

(54) **Mischventil**
Mixing valve
Robinet mitigeur

(30) Priorität: 13.03.1998 DE 19811099
(43) Veröffentlichungstag der Anmeldung: 15.09.1999
(73) Patentinhaber: Grohe Water Technology AG & Co. KG, 58675 Hemer (DE)
(72) Erfinder: Pawelzik, Manfred, 59494 Soest (DE); Titze, Horst, 58099 Hagen (DE); Graf, Manfred, 58640 Iserlohn (DE)

(56) Entgegenhaltungen:
- EP-A- 0 392 440
- DE-A- 3 738 854
- DE-A- 3 830 700
- US-A- 4 915 352

## Beschreibung

Die Erfindung betrifft ein Wasserventil, insbesondere Misch- und Mengenregulierventil, mit einem in einem Armaturenkörper einsetzbaren Sondergehäuse, z.B. Kartusche, das aus einer Hülse und einem wenigstens eine Öffnung für den Wasserdurchtritt aufweisenden, axial in der Hülse verschiebbaren Boden besteht, wobei im Sondergehäuse als Ventilelemente wenigstens eine, im wesentlichen unbeweglich gehaltene, wenigstens eine Öffnung aufweisende Ventilsitzscheibe und eine an der Ventilsitzscheibe angelagerte, mit Hilfe eines Betätigungsorgans bewegbare, wenigstens einen Wasserdurchtrittskanal aufweisende Steuerscheibe vorgesehen ist, wobei in der Öffnung des Bodens jeweils eine schlauchförmige Dichtung aus gummielastischem Material zur Abdichtung zwischen der Ventilsitzscheibe und dem Armaturenkörper angeordnet ist.

Ein derartiges Wasserventil ist aus der deutschen Offenlegungsschrift DE 38 30 700 A1 bekannt. Hierbei sind die Schlauchdichtungen separat gefertigt und werden bei der Montage einzeln in die Öffnungen des Bodens eingesetzt. Diese Einmontage der einzelnen Schlauchdichtungen ist zeitaufwendig und relativ kostenträchtig.

Aus der deutschen Offenlegungsschrift DE 37 38 854 A1 ist außerdem ein Wasserventil bekannt, bei dem die schlauchförmigen Dichtungen einstückig an dem Boden der Ventilkartusche ausgebildet sind. Hierbei hat sich in Versuchen gezeigt, daß es bei den unlösbar am Boden ausgebildeten Dichtungen in extremen Belastungssituationen zu Undichtigkeiten kommen kann.

Der Erfindung liegt die Aufgabe zugrunde, das im Oberbegriff des Anspruchs 1 angegebene Wasserventil zu verbessern, wobei insbesondere eine kostengünstige Erstellung und Montage des Sondergehäusebodens mit einer oder mehreren schlauchförmigen Dichtungen angestrebt wird.

Diese Aufgabe wird erfindungsgemäß durch die Merkmale gemäß Anspruch 1 gelöst. Weitere Ausgestaltungen der Erfindung sind in den Ansprüchen 2 bis 8 angegeben.

Die mit der Erfindung erzielbaren Vorteile bestehen insbesondere darin, daß einerseits die bewegliche Aufnahme der einzelnen schlauchförmigen Dichtungen im Boden des Sondergehäuses beibehalten werden kann, andererseits aber in der jeweiligen Öffnung des Bodens die schlauchförmige Dichtung eingespritzt wird, so daß eine besondere Einmontage der Dichtung entfällt und darüber hinaus die jeweilige Dichtung durch die Haftung in der Öffnung hinreichend sicher gehalten ist, so daß die Bodeneinheit gut handhabbar und auch automatisch, z. B. mit einem Roboter, in das Wasserventil einmontierbar ist.

Als günstige Werkstoffpaarung hat sich erwiesen, wenn der Boden mit den Öffnungen aus Polyoximethylen (POM) oder aus Polyamid (PA) im Spritzgießverfahren hergestellt wird, und anschließend nach der Aushärtung in die jeweilige Öffnung die schlauchförmige Dichtung aus Silikonkautschuk angespritzt wird.
In weiterer Ausgestaltung der Erfindung kann an der Innenwandung der schlauchförmigen Dichtung, nachdem diese ausgehärtet ist, ein Stützring aus festem Kunststoff, vorzugsweise aus Polyoximethylen (POM), angespritzt werden.

Zweckmäßig kann der Boden mit der jeweiligen Dichtung in der Öffnung und dem Stützring in einer variablen Spritzgießform hergestellt werden.

Ein Ausführungsbeispiel der Erfindung ist in der Zeichnung dargestellt und wird im folgenden näher beschrieben. Es zeigt
- Fig. 1: eine Ventilkartusche für ein Mischund Mengenregulierventil in Seitenansicht, teilweise geschnitten;
- Fig. 2: die in Fig. 1 gezeigte Ventilkartusche in Unteransicht;
- Fig. 3: einen Teil des in Fig. 2 gezeigten Bodens in der Schnittebene III, wobei die Dichtung mit einem Stützring in der Einspritzposition im Boden angeordnet ist;
- Fig. 4: den in Fig. 3 gezeigten Teil des Bodens, wobei die Dichtung mit dem Stützring axial in der Öffnung des Bodens geringfügig verschoben ist;
- Fig. 5: den in Fig. 3 gezeigten Teil des Bodens mit herausgezogener Dichtung und herausgezogenem Stützring.

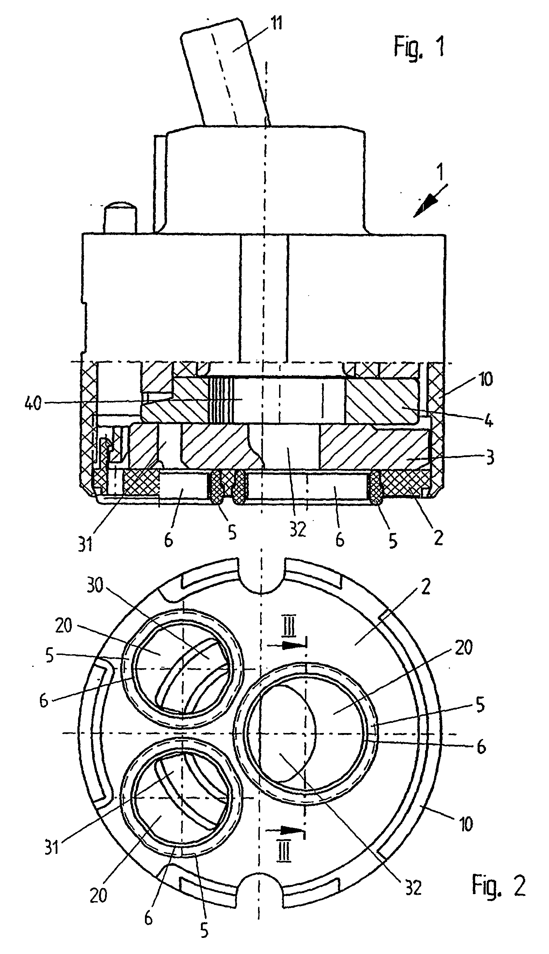

In Fig. 1 und 2 ist eine Ventilkartusche 1 für ein Wassermisch- und Wassermengenregulierventil gezeigt. Die Ventilkartusche 1 wird hierbei in einen Aufnahmeraum eines in der Zeichnung nicht dargestellten Armaturenkörpers eingesetzt, wobei in der Grundfläche des Aufnahmeraums im Armaturenkörper Anschlußkanäle für Kaltwasser, Warmwasser und Mischwasser münden. Die Ventilkartusche 1 wird hierbei mittels Spannschrauben in der Zeichnung nicht dargestellt - gegen die Grundfläche im Armaturenkörper verspannt, wobei die Abdichtung der einzelnen Kanäle mit Hilfe von schlauchförmigen Dichtungen 5 erfolgt. Mit einem Stellhebel 11 der Ventilkartusche 1 kann in einem ersten Freiheitsgrad das Mischungsverhältnis des zufließenden Kalt- und Warmwassers und in einem zweiten Freiheitsgrad die Gesamtdurchflußmenge des Wassers bestimmt werden.

Die Ventilkartusche 1 ist in einer stufenförmigen Hülse 10 gekapselt angeordnet, wobei an der im Durchmesser erweiterten Seite die Hülse 10 mit einem Boden 2 verschlossen ist, in dem Öffnungen 20 für das zufließende Kalt- und Warmwasser sowie für das abfließende Mischwasser vorgesehen sind. In der Hülse 10 liegt an dem Boden 2 angelagert eine im wesentlichen ortsfest gehaltene Ventilsitzscheibe 3 mit einer Einlaßöffnung 30 für Kaltwasser, einer Einlaßöffnung 31 für Warmwasser und einer Auslaßöffnung 32 für Mischwasser. An der gegenüberliegenden Seite der Ventilsitzscheibe 3 ist eine Steuerscheibe 4 angelagert und mit dem Stellhebel 11 in zwei Freiheitsgraden bewegbar, so daß mit einem, in der Steuerscheibe 4 ausgebildeten Wasserdurchtrittskanal 40 die Wassereinlaßöffnungen 30,31 mit der Auslaßöffnung 32 wahlweise in Überdeckung bringbar sind, so daß das Mischungsverhältnis des zufließenden Kalt- und Warmwassers sowie die Gesamtdurchflußmenge einstellbar ist. Die Ventilkartusche 1 ist in der Fig. 1 dargestellten Position der Steuerscheibe 4 in Absperrstellung.

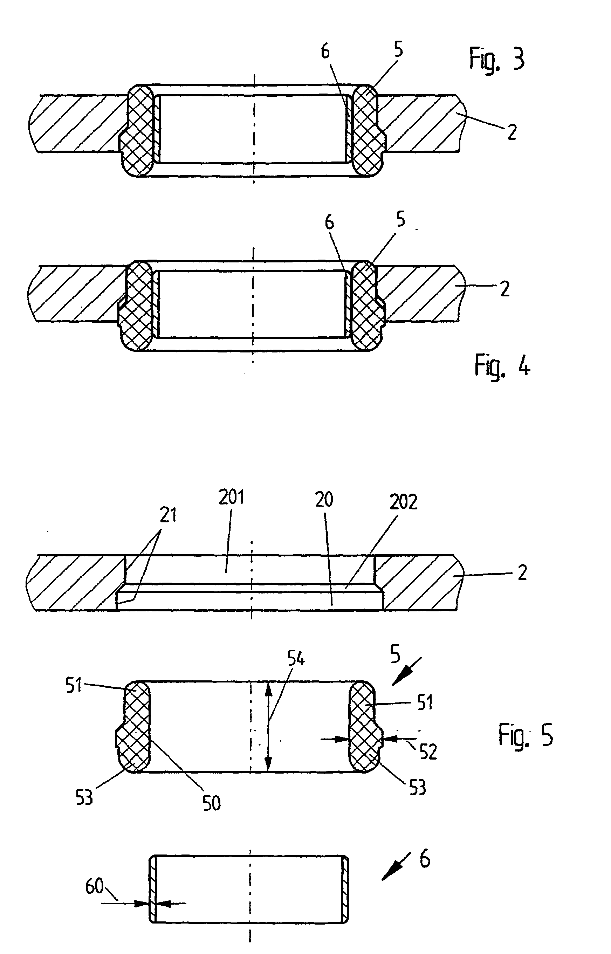

In dem Boden 2 sind drei Öffnungen 20 ausgebildet, wie es insbesondere aus Fig. 2 zu entnehmen ist. Die Öffnungen 20 sind dabei gestuft ausgebildet, wie es insbesondere aus Fig. 5 zu entnehmen ist, wobei jede Öffnung 20 an dem der Ventilsitzscheibe 3 zugekehrten Bereich eine Verengung 201 aufweist, wobei im mittleren Bereich der Wanddicke des Bodens 2 ein kegelförmiger Übergang von der Öffnung 20 auf die Verengung 201 vorgesehen ist. In der Öffnung 20 mit der Verengung 201 ist an der Wandung 21 die schlauchförmige Dichtung 5 aus gummielastischem Kunststoff, vorzugsweise Silikonkautschuk, angespritzt, wie es insbesondere aus Fig. 3 der Zeichnung zu entnehmen ist. Nach der Aushärtung der Dichtung 5 ist dann an einer Innenwandung 50 ein Stützring 6 aus festem Kunststoff, vorzugsweise Polyoximethylen (POM), angespritzt. Durch die Auswahl einer geeigneten Kunststoffwerkstoffpaarung wird erreicht, daß nach dem Spritzvorgang jeweils die Dichtung 5 mit dem Stützring 6 sicher in den Öffnungen 20,201 des Bodens 2 haftend gehalten wird, so daß eine Lagerung und anschließende Montage einer aus den Dichtungen 5 mit den Stützringen 6 und dem Boden 2 bestehenden Baugruppe gewährleistet ist. Wird andererseits in der Einbauposition in der Mischventilkartusche 1 durch extreme Wasserdruckbelastungen eine axiale geringfügige Verschiebung des Bodens 2 zu den zwischen der Ventilsitzscheibe 3 und der Grundfläche verspannten Dichtungen 5 erforderlich, so kann ab einer bestimmten Krafteinwirkung die Haftung der Dichtungen 5 an der jeweiligen Wandung 21 überwunden werden und die erforderliche Verschiebung erfolgen, wie es insbesondere aus Fig. 4 der Zeichnung zu entnehmen ist. Eine Verschiebung der jeweiligen Dichtung 5 in Richtung auf die Ventilsitzscheibe 3 ist dabei von dem kegelförmigen Übergang 202 in der jeweiligen Öffnung 20 auf die Verengung 201 begrenzt. In der anderen Richtung kann dagegen die Dichtung 5 und der Stützring 6 durch eine entsprechende Krafteinwirkung aus der Öffnung 20 und der Stützring 6 aus der Dichtung 5 entfernt werden, wie es insbesondere aus Fig. 5 der Zeichnung zu entnehmen ist.

Die Dichtung 5 ist schlauchförmig ausgebildet und hat zweckmäßig eine maximale Wandstärke 52 von etwa 0,35 der Gesamtlänge 54 der Dichtung 5..Die Verengung 201 erstreckt sich etwa über 1/2 bis 2/3 der Dicke des Bodens 2. Hierbei kann die Wandstärke im Bereich der Verengung 201 auf etwa 0,75 der maximalen Wandstärke 52 verringert werden und an der der Ventilsitzscheibe 3 zugekehrten Stirnseite im Querschnitt halbrund ausgebildet sein. Der aus der Öffnung 20 vorstehende Bereich 53 der Dichtung 5 kann zweckmäßig sprungartig vom Außenmantel auf etwa 0,85 der maximalen Wandstärke 52 verringert sein, wobei die der Grundfläche des Armaturenkörpers zugekehrte Stirnseite ebenfalls im Querschnitt halbrund ausgebildet ist. Hierbei ist die Innenwandung 50 der Dichtung 5 als zylindrische Mantelfläche ausgebildet. An dieser Innenwandung 50 kann der Stützring 6 angespritzt werden, wobei die Wandstärke 60 des Stützrings 6 etwa 1/8 der maximalen Wandstärke 52 der Dichtung 5 entspricht.

Bei dem vorstehend beschriebenen Ausführungsbeispiel sind die Dichtungen 5 in einem Boden 2 für ein Wassermisch- und Mengenregulierventil vorgesehen. Selbstverständlich kann die schlauchförmige Dichtung oder können die schlauchförmigen Dichtungen auch in Ventilkartuschen für andere Ventilausbildungen, wie beispielsweise einem Mehrwegeventil oder einem Einzelabsperrventil für Kaltwasser bzw. Warmwasser, vorgesehen werden.

## Patentansprüche

1. Wasserventil, insbesondere Misch- und Mengenregulierventil, mit einem in einem Armaturenkörper einsetzbaren Sondergehäuse, z.B. Kartusche (1), das aus einer Hülse (10) und einem wenigstens eine Öffnung (20) für den Wasserdurchtritt aufweisenden, axial in der Hülse (10) verschiebbaren Boden (2) besteht, wobei im Sondergehäuse als Ventilelemente wenigstens eine, im wesentlichen unbeweglich gehaltene, wenigstens eine Öffnung aufweisende Ventilsitzscheibe (3) und eine an der Ventilsitzscheibe (3) angelagerte, mit Hilfe eines Betätigungsorgans bewegbare, wenigstens einen Wasserdurchtrittskanal (40) aufweisende Steuerscheibe (4) vorgesehen ist, wobei in der wenigstens einen Öffnung (20) des Bodens (2) jeweils eine schlauchförmige Dichtung (5) aus gummielastischem Material zur Abdichtung zwischen der Ventilsitzscheibe (3) und dem Armaturenkörper angeordnet ist, **dadurch gekennzeichnet, daß** an der Wandung (21) der jeweiligen Öffnung (20) des Bodens (2) die Dichtung (5) aus gummielastischem Kunststoff angespritzt ist, wobei der Boden (2) aus einem Werkstoff hergestellt ist, der mit dem gummielastischem Kunststoff der Dichtung (5) derart zusammenwirkt, daß die angespritzte Dichtung (5) darau haftet, aber ab einer bestimmten Krafteinwirkung eine axiale Verschiebung des Bodens (2) zur Dichtung (5) erfolgen kann.

2. Wasserventil nach Anspruch 1, **dadurch gekennzeichnet, daß** die Dichtung (5) aus Silikonkautschuk und der Boden aus Polyoximethylen (POM) oder aus Polyamid (PA) besteht.

3. Wasserventil nach Anspruch 1 oder 2, **dadurch gekennzeichnet, daß** an der im Boden (2) angespritzten Dichtung (5) an der Innenwandung (50) ein Stützring (6) aus Kunststoff angespritzt ist.

4. Wasserventil nach Anspruch 3, **dadurch gekennzeichnet, daß** der Stützring (6) aus Polyoximethylen (POM) besteht.

5. Wasserventil nach wenigstens einem der Ansprüche 1 bis 4, **dadurch gekennzeichnet, daß** die Öffnung (20) jeweils im Bereich zur Ventilsitzscheibe (3) eine Verengung (201) aufweist, wobei die Dichtung (5) in diesem Bereich (51) eine entsprechend geringere Wandstärke aufweist.

6. Wasserventil nach Anspruch 5, **dadurch gekennzeichnet, daß** zur Verengung (201) ein kegelförmiger Übergang (202) ausgebildet ist, und die Verengung (201) sich etwa über 1/2 bis 2/3 der Dicke des Bodens (2) erstreckt.

7. Wasserventil nach Anspruch 5 oder 6, **dadurch gekennzeichnet, daß** die Dichtung (5) in der Verengung (201) eine Wandstärke von etwa 0,75 der maximalen Wandstärke (52) in der Öffnung (20) hat und an der Stirnseite im Querschnitt halbrund geformt ist, wobei ein aus der Öffnung (20) zum Armaturenkörper vorstehender Bereich (53) eine Wandstärke von etwa 0,85 der maximalen Wandstärke (52) hat, an der Stirnseite im Querschnitt halbrund ausgebildet ist und sprungartig in den Bereich der maximalen Wandstärke (52) der Öffnung (20) übergeht.

8. Wasserventil nach wenigstens einem der Ansprüche 3 bis 7, **dadurch gekennzeichnet, daß** der Stützring (6) als zylindrische Hülse ausgebildet ist, deren Wandstärke (60) etwa 1/8 der maximalen Wandstärke (52) der Dichtung (5) entspricht und deren Länge etwa der Länge der zylindrischen Innenwandung (50) der Dichtung (5) entspricht.

## Claims

1. Water valve, especially a mix-controlling and volume-controlling valve, having a separate housing. e.g. cartridge (1) insertable in the body of a fitting, the separate housing comprising a sleeve (10) and a base (2) axially displaceable in the sleeve (10) and having at least one opening (20) for passage of water, wherein at least one substantially immovably held valve seat disc (3) having at least one opening, and a control disc (4) mounted on the valve seat disc (3), having at least one channel (40) for passage of water, and movable by means of an operating element are provided in the separate housing as valve elements, wherein a respective tubular seal (5) of elastomeric material is arranged in the at least one opening (20) of the base (2) to provide a seal between the valve seat disc (3) and the body of the fitting, **characterised in that** the seal (5) of elastomeric material is injected onto the wall (21) of the particular opening (20) of the base (2), the base (2) being manufactured from a material which co-operates with the elastomeric plastics material of the seal (5) such that the injected seal (5) clings thereto, but axial displacement of the base (2) relative to the seal (5) can be effected from a certain application of force onwards.

2. Water valve according to claim 1, **characterised in that** the seal (5) consists of silicon rubber and the base of polyoxymethylene (POM) or of polyamide (PA).

3. Water valve according to claim 1 or 2, **characterised in that** at the seal (5) injected in the base (2), a supporting ring (6) of plastics material is injected onto the inner wall (50).

4. Water valve according to claim 3, **characterised in that** the supporting ring (6) consists of polyoxymethylene (POM).

5. Water valve according to at least one of claims 1 to 4, **characterised in that** each opening (20) has a constriction (201) in the region towards the valve seat disc (3), the seal (5) having **in that** region (51) a correspondingly smaller wall thickness.

6. Water valve according to claim 5, **characterised in that** a conical transition (202) is formed towards the constriction (201), and the constriction (201) extends over approximately 1/2 to 2/3 of the thickness of the base (2).

7. Water valve according to claim 5 or 6, **characterised in that** the seal (5) in the constriction (201) has a wall thickness of approximately 0.75 of the maximum wall thickness (52) in the opening (20) and at the end face is of semi-circular form in cross-section, wherein a region (53) protruding out of the opening (20) towards the body of the fitting has a wall thickness of approximately 0.85 of the maximum wall thickness (52), at the end face, is of semi-circular construction in cross-section, and changes abruptly into the region of maximum wall thickness (52) of the opening (20).

8. Water valve according to at least one of claims 3 to 7, **characterised in that** the supporting ring (6) is in the form of a cylindrical sleeve, the wall thickness (60) of which corresponds to approximately 1/8 of the maximum wall thickness (52) of the seal (5) and the length of which corresponds approximately to the length of the cylindrical inner wall (50) of the seal (5).

## Revendications

1. Soupape à eau, notamment soupape mélangeuse et de régulation de débit, comprenant :
- un boîtier spécifique pouvant être incorporé au corps de robinet, par exemple une cartouche (1) composée d'une douille (10) et d'un fond (2) pouvant coulisser axialement dans la douille (10) et présentant au moins une ouverture (20) pour le passage de l'eau,
- dans le boîtier spécifique, en tant qu'éléments de soupape au moins un disque de siège de soupape (3) essentiellement maintenu immobile et percé d'au moins une ouverture, ainsi qu'un disque de commande monté sur le disque de siège (3), pouvant être déplacé à l'aide d'un organe de manoeuvre et présentant au moins un canal de passage d'eau (40),
- dans l'au moins une ouverture (20) du fond (2), un joint d'étanchéité (5), de forme tubulaire, fait d'un matériau élastique comme du caoutchouc pour assurer l'étanchéité entre le disque de siège de soupape (3) et le corps de robinet
**caractérisée en ce que**
le joint d'étanchéité (5) en matière plastique élastique comme du caoutchouc est injecté sur la paroi (21) de chaque ouverture (20) du fond (2), fabriqué en un matériau qui coopère avec la matière plastique du joint injecté (5) de manière qu'elle adhère sur lui, tout en permettant à ce fond (2) de coulisser axialement en direction du joint d'étanchéité, sous l'action d'une force atteignant au moins une certaine valeur.

2. Soupape selon la revendication 1,
**caractérisée en ce que**
le joint d'étanchéité (5) est en caoutchouc de silicone et le fond est en polyoxyméthylène (POM) ou en polyamide (PA).

3. Soupape selon la revendication 1 ou 2,
**caractérisée en ce que**
sur la paroi interne (50) du joint d'étanchéité (5) injecté dans le fond (2), une bague de soutien (6) en matière plastique est injectée.

4. Soupape selon la revendication 3,
**caractérisée en ce que**
la bague de soutien (6) est en polyoxyméthylène (POM).

5. Soupape selon au moins l'une des revendications 1 à 4,
**caractérisée en ce que**
chaque ouverture (20) présente, dans la zone située vers le disque de siège de soupape (3), un rétrécissement (201), et dans cette zone (51) le joint d'étanchéité (5) présente une réduction correspondante de l'épaisseur de sa paroi.

6. Soupape selon la revendication 5,
**caractérisée en ce qu'**
il est prévu une transition (202), conique, pour raccorder le rétrécissement (201) qui s'étend sur environ 1/2 à 2/3 de l'épaisseur du fond (2).

7. Soupape selon la revendication 5 ou 6,
**caractérisée en ce que**
le joint d'étanchéité (5) présente dans le rétrécissement (201) une épaisseur de paroi qui est environ les 3/4 de l'épaisseur maximale de la paroi (52) dans l'ouverture (20) et ce joint (5) présente sur sa face frontale, une section semi-circulaire tandis que sa partie (53) qui fait saillie sur l'ouverture (20) du côté du corps de robinet a une paroi dont l'épaisseur est 0,85 fois l'épaisseur maximale (52) et qui, sur sa face frontale, a une section semi-circulaire et se poursuit, avec décrochement brusque dans la zone d'épaisseur maximale de paroi (52) dans l'ouverture (20).

8. Soupape selon au moins l'une des revendications 3 à 7,
**caractérisée en ce que**
la bague de soutien (6) est une douille cylindrique, avec une épaisseur de paroi (60) égale à environ 1/8 de l'épaisseur maximale de paroi (52) du joint d'étanchéité (5) et une longueur correspondant à peu près à celle de la paroi cylindrique interne (50) du joint (5).
